# EUROPEAN PATENT SPECIFICATION

(11) **EP 2 831 317 B1**
(45) Date of publication and mention of the grant of the patent: **02.06.2021**
(21) Application number: 13717633.5
(22) Date of filing: 30.03.2013
(51) Int. Cl.: C08L 67/02, D01F 6/62, C08G 63/181

(54) **POLYESTERS AND FIBERS MADE THEREFROM**
POLYESTER UND DARAUS HERGESTELLTE FASERN
POLYESTERS ET FIBRES OBTENUES À PARTIR DE CEUX-CI

(30) Priority: 30.03.2012 US 201261618449 P
(43) Date of publication of application: 04.02.2015
(60) Divisional application: 21169994.7
(73) Proprietor: DuPont Industrial Biosciences USA, LLC, Wilmington, Delaware 19805 (US)
(72) Inventor: NEDERBERG, Fredrik, East Amherst, NY 14051 (US); RAJAGOPALAN, Bhuma, Wilmington, Delaware 19806 (US)
(74) Representative: Mewburn Ellis LLP
(86) International application number: PCT/US2013/034735
(87) International publication number: WO 2013/149222

(56) References cited:
- WO-A1-2010/140599
- WO-A1-2013/044338
- WO-A1-2013/055860
- WO-A1-2013/062408
- US-A- 2 551 731
- US-A1- 2011 124 839
- DATABASE WPI Week 201102 Thomson Scientific, London, GB; AN 2010-Q22036 XP002699090, -& JP 2010 280767 A (CANON KK) 16 December 2010 (2010-12-16)
- JIPING MA, XINFEI YU, JIE XU, YI PANG: "Synthesis and crystallinity of poly(butylene 2,5-furandicarboxylate)", POLYMER, vol. 53, 24 July 2012 (2012-07-24), pages 4145-4151, XP002699109, Oxford, UK DOI: 10.1016/j.polymer.2012.07.022
- DATABASE WPI Week 201121 Thomson Scientific, London, GB; AN 2011-A35208 XP002699110, -& CN 101 899 145 A (UNIV JIANGNAN) 1 December 2010 (2010-12-01)
- DATABASE WPI Week 200901 Thomson Scientific, London, GB; AN 2009-A17075 XP002699091, -& JP 2008 291244 A (MITSUBISHI CHEM CORP) 4 December 2008 (2008-12-04)
- EERHART, A.J.J.E., FAAIJ, A.P.C. AND PATEL, M.K.: "Replacing fossil based PET with biobased PEF; process analysis, energy and GHG balance.", ENERGY ENVIRON. SCI., vol. 2012, no. 5, 15 February 2012 (2012-02-15), pages 6407-6422, XP002699114, LONDON, UK DOI: 10.1039/c2ee02480b

## Description

### FIELD OF THE INVENTION

This invention relates in general to fibers prepared from polyesters and in particular poly(trimethylene-2,5-furandicarboxylate) (PTF) and PTF based blends and copolymers.

### BACKGROUND INFORMATION

Synthetic fibers are found in many essential applications ranging from apparel to carpets to automobile interiors. Polypropylene (PP), polyethylene terephthalate (PET) and polyamides (nylon-6 and nylon-6,6) are frequently used polymers in such applications and while manufacturing routes and applications have been developed during the past several decades, these polymers are all derived from fossil fuel.

In the recent years sustainable routes have been developed for bioderived monomers and polymers. One such example is Sorona® polytrimethylene terephthalate (PTT) that is based on bio-derived 1,3-propanediol (Bio-PDO™) and terephthalic acid. The biocontent of the polymer resin is 37% by weight. Since terephthalic acid is derived from fossil fuel (naptha) there is an interest in new bio-derived aromatic monomers that are compatible with traditional polymerization routes. Furan 2,5-dicarboxylic acid (also referred to herein as 2,5-furandicarboxylic acid, or FDCA) meets this requirement since it is a bifunctional aromatic diacid made from sugar intermediates. The polymer produced from FDCA and Bio-PDO™ (PolyTrimethylene-2,5-Furandicarboxylate (PTF)), is thus 100% bioderived. These bio-derived polymers can be used to produce bioderived fibers. There is substantial interest in 100% bio-derived polyester fibers because bio-derived polymers are resourced from renewable materials, and there is typically a reduced environmental footprint versus incumbent fibers.

The production of polymers from 2,5-furandicarboxylic acid and ethylene glycol, 1,3-propanediol, 1,4-butanediol and 1,6-hexanediol, having between 100-500 repeat units, is disclosed in CN101899145. Similarly, US 2,551,731 discloses the production of a polymer from 2,5-furandicarboxylic acid and ethylene glycol (see Example 2 of that document).

### SUMMARY OF THE INVENTION

In an aspect of the invention, there is a fiber according to claim 1.

In an embodiment, a fiber of the present invention is obtained from a polymer composition which is a polymer blend comprising poly(trimethylene-2,5-furandicarboxylate), alternatively referred to herein as PTF, and a second poly(alkylenefurandicarboxylate) that is different from PTF, and wherein the second poly(alkylenefurandicarboxylate) is derived from furan dicarboxylic acid and an aliphatic diol selected from the group consisting of ethylene glycol and C₄ to C₁₂ aliphatic diols.

In one embodiment, a fiber of the present invention is obtained from a polymer blend comprising PTF and poly(alkylene terephthalate), wherein the poly(alkylene terephthalate) comprises a C₂ to C₁₂ aliphatic diol moiety.

In an embodiment, a fiber of the present invention is obtained from a copolymer comprising of 2,5-furandicarboxylate, terephthalate and 1,3 propane diol monomer units.

The molar ratio of 2,5-furan dicarboxylic acid to other diacids can be any range, for example the molar ratio can be greater than 1:100 or alternatively in the range of 1:100 to 100 to 1 or 1:9 to 9:1 or 1:3 to 3:1 or 1:1 in which the diol is added at an excess of 1.2 to 3 equivalents to total diacids charged.

In an aspect, there is a method of making a fiber comprising the steps:
a. providing a a polymer composition, wherein the polymer comprises poly(alkylene furandicarboxylate) obtained by polymerization of a reaction mixture comprising a furan dicarboxylic acid and a C₂ to C₁₂ aliphatic diol having a number average molecular weight of 10,000-18,000 g/mol; and
b. spinning the polymer composition to form fibers, such that the temperature applied to the polymer during spinning is in the range of about 180-265 °C ; wherein the resulting fibers are amorphous.

### BRIEF DESCRIPTION OF THE DRAWINGS

The invention is illustrated by way of example and not limited to the accompanying figures.
Fig. 1 schematically illustrates an exemplary apparatus for spinning either spun-drawn or partially oriented yarn.
Fig. 2 is a schematic illustration of an exemplary press spinning unit.

### DETAILED DESCRIPTION

Disclosed is a fiber comprising a polymer, wherein the polymer comprises poly(alkylene furandicarboxylate) derived from the polymerization of furan dicarboxylic acid and a C₂ to C₁₂ aliphatic diol selected from the list of claim 1.

Poly(alkylene-furandicarboxylate) can be prepared from a C₂ to C₁₂ aliphatic diol and from 2,5-furan dicarboxylic acid or a derivative thereof. In an embodiment, the aliphatic diol is a biologically derived C₃ diol, such as 1, 3 propane diol.

Derivatives of 2,5-furan dicarboxylic acid suitable for use in the practice of the present invention include furan dicarboxylic acids wherein the hydrogen atoms at the 3 and/or 4 position(s) on the furan ring are replaced, independently of each other, with alkylene substituents such as, for example, -CH₃, -C₂H₅, or a C₃ to C₂₅ straight-chain, branched or cyclic alkane group, optionally containing one to three heteroatoms selected from the group consisting of O, N, Si and S, and also optionally substituted with at least one member selected from the group consisting of -CI, -Br, -F, -I, -OH, - NH₂ and -SH.

One of ordinary skill in the art would also know that in the polymerization reaction described herein, carboxylic acid derivatives such as acid halides, carboxylic acid esters, and carboxylic acid anhydrides can be useful functional equivalents of either or both of the carboxylic acid moieties of the furan. That is, these functionally equivalent groups can be used to obtain the polymeric fiber of the presently claimed invention when reacted with C₂ to C₁₂ aliphatic diols . For convenience, the carboxylic acid groups of the furan dicarboxylic acid will be referred to as "acid" or "diacid" groups, but for the purposes of the present invention, such reference will also incorporate any conventional functional equivalent of a carboxylic acid.

As used herein, the terms "biologically-derived" and "bio-derived" are used interchangeably and refer to chemical compounds including monomers and polymers, that are obtained from plants and contain only renewable carbon - that is carbon obtained from a source that can be regenerated, for example, from crops - and not fossil fuel-based or petroleum-based carbon. Hence, bio-derived materials have less impact on the environment as their creation does not deplete diminishing fossil fuels and, upon degradation, releases carbon back to the atmosphere for use by plants once again.

The C₂ to C₁₂ aliphatic diol used in claim 1 is ethylene glycol, diethylene glycol, 1,2-propanediol, 1,3-propanediol, 1,4-butanediol, 1,5-pentanediol, 1,6-hexanediol, 1,4-cyclohexanedimethanol, or 2,2-dimethyl-1,3-propanediol.

In a particular embodiment of the present invention, an aliphatic diol can be 1,3-propanediol (Bio-PDO™) that is biologically derived and is polymerized with a furan 2,5-dicarboxyl derivative, whereby the polymer shown below (poly(trimethylene-2,5-furandicarboxylate), known alternatively herein as PTF, can be obtained .

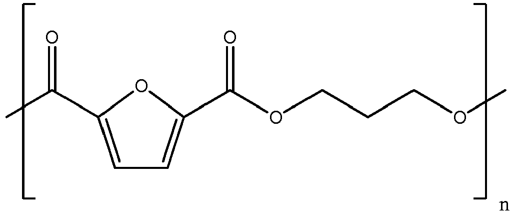

Other variations of PTF can be obtained by using 1,2- propanediol, or by using mixtures of the two propanediols.

In a fiber of the present invention, the polymer can have a number average molecular weight (Mn) in the range of 10,000-12,000, or in the range of 10,000-13,000, or in the range of 10,000-14,000, or in the range of 10,000-15,000, or in the range of 10,000-16,000, or in the range of 10,000-17,000 g/mol.

Desirable molecular weight for a polymer composition useful in the practice of the present invention can depend on the final application or use of the fiber. However, typical of most polymers, processing polymers having very high molecular weight can be difficult due to high melt viscosity of polymeric materials of higher molecular weight. Therefore, it can be desirable to balance difficulties in processing high molecular weight polymers with any improvement that can be obtained in the properties of high molecular weight polymers in the practice of the present invention.

A fiber of the present invention can have a modulus in the range of 10 -100 g/den, or in the range of 30-100 g/den, or in the range of 35-100 g/den, or in the range of 40-100 g/den, or in the range of 45-100 g/den, or in the range of 50-100 g/den, or in the range of 55-100 g/den.

A fiber of the present invention can have a tenacity in the range of about 0.2-5 g/den, or in the range of 0.8-5 g/den, or in the range of about 1.0-5 g/den, or in the range of 1.2-5 g/den, or in the range of 1.4-5 g/den, or in the range of 1.6-5 g/den, or in the range of 1.8-5, or in the range of 2.0-5 g/den, or in the range of 2.2-5 g/den, or in the range of 2.4-5 g/den, or in the range of about 2.6-5 g/den, or in the range of 2.8-5 g/den, or in the range of 3.0-5 g/den Typically, as the molecular weight of the polymer of the present invention increases, the tenacity will have a tendency to increase until a plateau is reached. Therefore tenacity, as it may relate to molecular weight of the polymer, can be manipulated by varying the molecular weight within the broad range described herein.

A fiber of the present invention can have a percent elongation in the range of 5-500, or in the range of 25-500, or in the range of 30-500, or in the range of about 35-500, or in the range of 40-500, or in the range of 45-500, or in the range of 50-500, or in the range of 55-500, or in the range of 60-500, or in the range of 65-500, or in the range of 70-500, or in the range of 75-500, or in the range of 80-500, or in the range of 85-500, or in the range of 90-500, or in the range of 95-500, or in the range of 100-500, or in the range of 150-500, or in the range of 200-500. Typically, as the molecular weight of the polymer of the present invention increases, the percent elongation will increase until a plateau is reached. Percent elongation, as it may relate to molecular weight of the polymer, therefore can be manipulated by varying the molecular weight within the broad range described herein.

A fiber of the present invention can be oriented or not oriented, and a polymer suitable for use in the practice of the present invention is amorphous . It can be useful to orient fibers in applications such as apparel or carpets. Alternatively, fibers that are not oriented can be useful in such applications as staple.

In one embodiment, a polymer as described herein has a heat of crystallization less than1 J/g or less than 10 J/g , as measured by differential scanning calorimetry with heating rates of 10 °C/min. In one embodiment, the polymer consists essentially of poly(trimethylene-2,5-furandicarboxylate) (PTF) and is amorphous.

Amorphous polymers can provide fibers of the present invention that are suitable for use in such applications as disposable garments, for example medical gowns, protective apparel, disposable gloves, diapers.

In one embodiment, the polymer is a polymer blend comprising poly(trimethylene-2,5-furandicarboxylate) and a second poly(alkylenefurandicarboxylate) that is different from the PTF, wherein the poly(alkylenefurandicarboxylate) is obtained by polymerization of a furan dicarboxylic acid and an aliphatic diol selected from the group consisting of ethylene glycol, and C₄ to C₁₂ diols, or mixtures thereof. The polymers can be blended in any proportion in order to provide a fiber having properties desirable in a given fiber application. One of ordinary skill in the art would understand how to obtain desirable fiber properties by using different proportions of materials to achieve the properties needed from the blend. For example, a blend useful for preparing a fiber of the present invention can have from about 0.1 to about 99.9% or from about 5 to about 75% or from about 10 to about 50% by weight of PTF based on the total weight of the blend, in order to obtain a fiber having desirable modulus, elongation, or tenacity.

In another embodiment, a fiber of the present invention is obtained from a polymer blend comprising poly(trimethylene-2,5-furandicarboxylate) and poly(alkylene terephthalate). The polymers can be blended in any proportion in order to provide a fiber having properties desirable in a given fiber application. One of ordinary skill in the art would understand how to obtain desirable fiber properties by blending different proportions of materials. For example, a blend useful for preparing a fiber of the present invention can have from about 0.1 to about 99.9% or alternatively from about 5 to about 75% or from about 10 to about 50% by weight of PTF based on the total weight of the blend, in order to obtain a fiber having desirable modulus, elongation, or tenacity.

In another embodiment, a fiber of the present invention can be obtained from a random or block copolymer comprising 2,5-furandicarboxyl, terephthalate and Bio-PDO™ monomer units. The monomers can be reacted in any proportion in order to provide a fiber having properties desirable in a given fiber application. One of ordinary skill in the art would understand how to obtain desirable fiber properties by using different proportions of materials to achieve the properties of the fiber which are desired. For example, a copolymer useful for preparing a fiber of the present invention can have from about 0.1 to about 99.9% or alternatively from about 5 to about 75% or alternatively from about 10 to about 50% by weight of PTF-based repeat units based on the total weight of the copolymer, in order to obtain a fiber having desirable modulus, elongation, or tenacity. PTF-based repeat units, as the term is used herein, include a diol and a furanyl dicarboxylate moiety.

The molar ratio of 2,5-furan dicarboxylic acid to other diacids can be any ratio that provides a fiber having the desirable properties for the intended fiber application. For example the molar ratio can be greater than 1:100 or alternatively in the range of from about 1:100 (2,5-furan dicarboxylic acid):(other acid) to 100:1 or 1:9 to 9:1 or 1:3 to 3:1 or 1:1 in which the diol is added at an excess of 1.2 to 3 equivalents to total diacids charged.

Other diols and polyols useful as monomers in the practice of the present invention include, for example, 1,4-benzenedimethanol, poly(ethylene glycol), poly(tetrahydrofuran), 2,5-di(hydroxymethyl)tetrahydrofuran, isosorbide, glycerol, pentaerythritol, sorbitol, mannitol, erythritol, and threitol.

Other polyfunctional aromatic acids suitable for use in the practice of the present invention include , for example, terephthalic acid, isophthalic acid, adipic acid, azelic acid, sebacic acid, dodecanoic acid, 1,4-cyclohexane dicarboxylic acid, maleic acid, succinic acid, naphthalene dicarboxylic acid, and 1,3,5-benzenetricarboxylic acid.

Hydroxy acids can be suitable comonomers having both hydroxyl and acid functionality for use in the practice of the present invention to form copolymers, and thereby form covalent linkages with acid and/or hydroxyl functional moieties in the polymerization mixture. Examples of suitable hydroxy acids include but are not limited to, glycolic acid, hydroxybutyric acid, hydroxycaproic acid, hydroxyvaleric acid, 7-hydroxyheptanoic acid, 8-hydroxycaproic acid, 9-hydroxynonanoic acid, or lactic acid; or those derived from pivalolactone, ε-caprolactone or L,L, D,D or D,L lactides.

Exemplary copolymers derived from 2,5-furan dicarboxylic acid, at least one of a diol or a polyol monomer, and at least one of a polyfunctional aromatic acid or a hydroxyl acid include, but are not limited to copolymer of 1,3-propanediol, 2,5-furandicarboxylic acid and terephthalic acid; copolymer of 1,3-propanediol, 2,5-furandicarboxylic acid and succinic acid; copolymer of 1,3-propanediol, 2,5-furandicarboxylic acid; copolymer of 1,3-propanediol, 2,5-furandicarboxylic acid and adipic acid; copolymer of 1,3-propanediol, 2,5-furandicarboxylic acid and sebacic acid, copolymer of 1,3-propanediol, 2,5-furandicarboxylic acid and isosorbide; copolymer of 1,3-propanediol, 2,5-furandicarboxylic acid and isomannide.

The intrinsic viscosity of the poly(trimethylene-2,5-furandicarboxylate) is at least 0.3 dl/g, or at least 0.5 dl/g or at least 0.6 dl/g and most preferably at least 0.7 dl/g. The intrinsic viscosity of the disclosed polymer composition is up to about 0.52 dl/g, or up to 0.7 dl/g, or up to about 0.92 dl/g.

Additives, including delusterants, heat stabilizers, viscosity boosters, optical brighteners, pigments, and antioxidants, can be used. TiO₂ or other pigments can be added, such as described in U.S. Pat. Nos. 3,671,379, 5,798,433 and 5,340,909, EP 699 700 and 847 960, and WO 00/26301 .

By "fibers", reference is made to items recognized in the art as fibers, such as continuous filaments, monofilament, staple, etc. The fibers can be round or have other shapes, such as octalobal, delta, sunburst (also known as sol), scalloped oval, trilobal, tetra-channel (also known as quatra-channel), scalloped ribbon, ribbon, starburst, etc. They can be solid, hollow or multi-hollow. They can be used to prepare fabrics or textiles, carpets (from bulked continuous filaments and staple), and other products. Fabrics include knitted, woven and nonwoven fabrics.

The fibers may be produced from the PTF homopolymer or from blends comprising PTF and copolymers comprising of PTF repeat units. The fiber of the present invention can have fiber denier of less than 1 or less than 50.

A fiber as disclosed herein can be, and more typically is, a continuous filament fiber. Alternatively, however, the fiber can be a discontinuous filament fiber that is composed of pieces of entangled filament, and such a fiber can have an length/diameter ratio (L/D) of about 20-60. Yarns as formed from such fibers are typically long unbroken lengths of continuous filament fiber in which the fibers are bonded or interlocked together and are typically not twisted. If desired, however, a yarn can be prepared from a fiber hereof by providing forward or reverse twist therein, and this is more often the case if the fiber used is a discontinuous filament fiber.

The advantage of PTF compared to existing polyesters, is that the PTF is 100% bio-derived and also allows for lower processing temperatures due to its relatively lower melting point. Further, PTF also lends itself to be spun at relatively low molecular weights.

### Method of preparation of Polymer

The various polymers used in a fiber hereof include polyesters, and also various copolymers (random or block), that may be made according to the selection of which monomers are used for polymerization.

The polymer can be prepared from a C₂ to C₁₂ aliphatic diol and from 2,5-furan dicarboxylic acid or a derivative thereof. Aliphatic diol is a biologically derived C₃ diol, such as 1, 3 propane diol. Derivatives of 2,5-furan dicarboxylic acid suitable for use in the practice of the present invention include furan dicarboxylic acids wherein the hydrogen atoms at the 3 and/or 4 position(s) on the furan ring are replaced, independently of each other, with alkylene substituents such as, for example, -CH₃, - C₂H₅, or a C₃ to C₂₅ straight-chain, branched or cyclic alkane group, optionally containing one to three heteroatoms selected from the group consisting of O, N, Si and S, and also optionally substituted with at least one member selected from the group consisting of -Cl, -Br, -F, -I, -OH, -NH₂ and -SH.

A polymer for use herein can be made by a two-step process, wherein first a prepolymer is made having a 2,5-furandicarboxylate moiety within the polymer backbone. This intermediate product is preferably an ester composed of two diol monomers and one diacid monomer, wherein at least part of the diacid monomers comprises 2,5-FDCA, followed by a melt-polymerization of the prepolymers under suitable polymerization conditions. Such conditions typically involve reduced pressure to remove the excess of diol monomers. Esters of 2,5 furan dicarboxylic acid or the diacid itself or mixtures of both may be used.

For instance, in step (I) dimethyl-2,5-furandicarboxylate is reacted in a catalyzed transesterification process with about 2 equivalents of a diol, to generate the prepolymer while removing 2 equivalents of methanol. Dimethyl-2,5-furandicarboxylate is preferred, as this transesterification step generates methanol, a volatile alcohol that is easy to remove. However, as starting material, diesters of 2,5-FDCA with other volatile alcohols or phenols (e.g. having a boiling point at atmospheric pressure of less than 150°C, preferably less than 100°C, more preferably of less than 80°C) may be used as well. Preferred examples therefore include ethanol, methanol and a mixture of ethanol and methanol. The aforementioned reaction leads to a polyester. Moreover, the diol monomers may if desired contain additional hydroxyl groups, such as glycerol, pentaerythritol or sugar alcohols. The furan diacid may also be used directly, or converted to the diester or can be added along with the diester.

Step (II) of this process is a catalyzed polycondensation step, wherein the prepolymer is polycondensed under reduced pressure, at an elevated temperature and in the presence of a suitable catalyst. In various embodiments of this process, the first step is a transesterification step, catalyzed by a specific transesterification catalyst at a temperature preferably in the range of from about 150-260°C, more preferably in the range of from about 180-240°C and carried out until the starting ester content is reduced until it reaches the range of about 3 mol% to less than about 1 mol%. The transesterification catalyst may be removed, to avoid interaction in the second step of polycondensation, but typically is included in the second step. The selection of the transesterification catalyst is therefore effected by the selection of the catalyst used in the polycondensation step. Tyzor® organic titanates and zirconates catalysts such Tyzor® TPT, Tyzor® TBT can be used. Tin(IV) based catalysts, preferably organotin(IV) based catalysts such as alkyltin(IV) salts including monoalkyltin(IV) salts, dialkyl and trialkyltin(IV) salts and mixtures thereof, can also be used as transesterification catalysts, that are better than tin(II) based catalysts such as tin(II) octoate. These tin(IV) based catalysts may be used with alternative or additional transesterification catalysts. Antimony based catalysts can also be used.

Examples of alternative or additional transesterification catalysts that may be used in step 1 include one or more of titanium(IV) alkoxides or titanium(IV) chelates, zirconium(IV) chelates, or zirconium(IV) salts (e.g. alkoxides); hafnium(IV) chelates or hafnium(IV) salts (e.g. alkoxides). Other suitable transesterification catalysts are butyltin(IV) tris(octoate), dibutyltin(IV) di(octoate), dibutyltin(IV) diacetate, dibutyltin(IV) laureate, bis(dibutylchlorotin(IV)) oxide, dibutyltin dichloride, tributyltin(IV) benzoate and dibutyltin oxide, antimony oxides.

The active catalyst as present during the reaction may be different from the catalyst as added to the reaction mixture. The catalysts are used in an amount of about 0.01 mol % relative to initial diester to about 0.2 mol % relative to initial diester, more preferably in an amount of about 0.04 mol % of initial diester to about 0.16 mol % of initial diester.

The intermediate product is used as such in the subsequent polycondensation step. In this catalyzed polycondensation step, the prepolymer is polycondensed under reduced pressure, at an elevated temperature and in the presence of a suitable catalyst. The temperature is preferably in the range of about the melting point of the polymer to about 30°C above this melting point, but preferably not less than about 180°C. The pressure should be reduced preferably gradually. It should preferably be reduced to as low as possible, more preferably below 1 mbar.

This second step is preferably catalyzed by a polycondensation catalyst such as one of those listed below, and the reaction is preferably carried out at mild melt conditions. Examples of suitable polycondensation catalysts include titanium(IV) alkoxides or titanium(IV) chelates, zirconium(IV) chelates, or zirconium(IV) salts (e.g. alkoxides); hafnium(IV) chelates or hafnium(IV) salts (e.g. alkoxides), tin(II) salts such as tin(II) oxide, tin(II) dioctoate, butyltin(II) octoate, or tin(II) oxalate. Various catalysts include tin(II) salts obtained by the reduction of the tin(IV) catalyst, e.g. alkyltin(IV), dialkyltin(IV), or trialkyltin(IV) salts, antimony based salts Additional catalyst can be added prior to the condensation reaction to increase reaction efficacy, which can be used as transesterification catalyst with a reducing compound. Reducing compounds used may be well-known reducing compounds, preferably phosphorus compounds. Particularly preferred reducing compounds are organophosphorus compounds of trivalent phosphorus, in particular a monoalkyl or dialkyl phosphinate, a phosphonite or a phosphite. Examples of suitable phosphorus compounds are triphenyl phosphite, diphenyl alkyl phosphite, phenyl dialkyl phosphite, tris(nonylphenyl)phosphite, trilauryl phosphite, trioctadecyl phosphite, distearyl pentaerythritol diphosphite, tris(2,4-di-tert-butylphenyl)phosphite, diisodecyl pentaerythritol diphosphite, di(2,4-di-tert-butylphenyl)pentaerythritol diphosphite, tristearylsorbitol triphosphite, tetrakis(2,4-di-tert-butylphenyl) 4,4'-diphenylenediphosphonite, 4,4'-isopropylidenediphenol alkyl (C12-15) phosphite, poly(dipropylene glycol) phenyl phosphite, tetraphenyl dipropylene glycol phosphite, tetraphenyl diisopropylene glycol phosphite, trisisodecyl phosphite, diisodecyl-phenyl phosphite, diphenyl isodecyl phosphite, and mixtures of these.

Other suitable catalysts therefore include tin(II) salts such as tin(II) dioctoate, butyl(II) octoate and other alkyltin(II) octoate compounds, prepared from the corresponding tin(IV) salt using e.g. a trialkyl phosphite, a monoalkyl diaryl phosphite, a dialkyl monoaryl phosphite or a triaryl phosphite. Preferably, the reducing compound is added in the melt of the prepolymer. The addition of the reducing compound at this stage will avoid discoloration of the polymer product and increase molecular weight of the polymer.

The catalysts are used in an amount of about 0.01 mol% relative to initial diester to about 0.2 mol% relative to initial diester, more preferably in an amount of about 0.04 mol% of initial diester, to about 0.16 mol% of initial diester.

In solid state polymerization (SSP) processes pellets, granules, chips or flakes of polymer are subjected for a certain amount of time to elevated temperatures (below melting point) in a hopper, a tumbling drier or a vertical tube reactor or the like. The presence of titanium based catalysts during SSP of the FDCA-based polymers has enabled the polymer to reach a number average molecular weight of 20,000 and greater. As compared to SSP as typically used to upgrade recycled PET, the temperature should be elevated but nonetheless remain (well) below the melting point of the polymer.

In an aspect, there is a method of making a fiber comprising providing a polymer composition as defined in claim 14
and spinning the polymer composition to form fibers, such that the highest temperature applied to the polymer during spinning is in the range of about 210-250 °C.

The highest temperature applied to the polymer during spinning is in the range of 210°C-215°C, or in the range of 210-220°C, or in the range of 210-225°C, or in the range of 210-230°C, or in the range of 210-235°C, or in the range of 210-240°C, or in the range of 210-245°C, or in the range of 210-265°C.

In an embodiment, the step of providing a polymer composition comprises providing a polymer blend comprising poly(trimethylene-2,5-furandicarboxylate) and poly(alkylene-furandicarboxylate), as disclosed *supra.*

In another embodiment, the step of providing a polymer composition comprises providing a polymer blend comprising poly(trimethylene-2,5-furandicarboxylate) and poly(alkylene terephthalate), as disclosed *supra.*

In yet another embodiment, the step of providing a polymer composition comprises providing a copolymer derived from 2,5-furan dicarboxylic acid at least one of a diol or a polyol monomer, as disclosed *supra.*

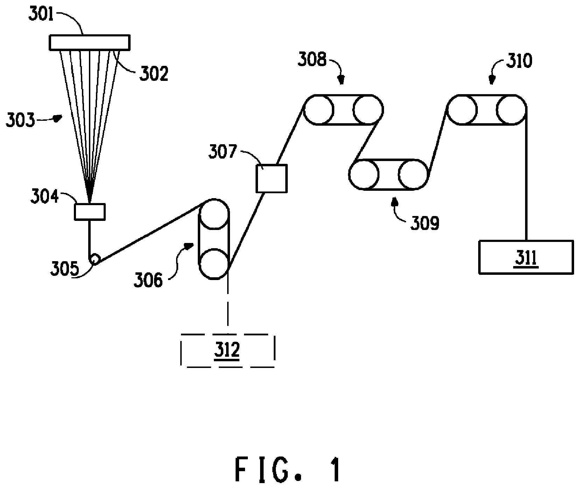

Figure 1 schematically illustrates an exemplary apparatus for spinning either spun-drawn or partially oriented yarn, which is useful in the process of the spinning disclosed fiber. An exemplary process using the exemplary apparatus shown in Figure 1 is disclosed *infra* in Example 1.

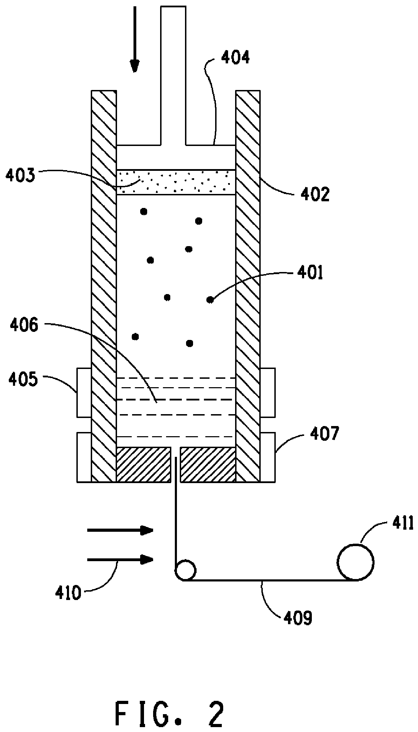

Fig. 2 is a schematic illustration of an exemplary press spinning unit, which is useful in the process of the spinning disclosed fiber. An exemplary process using the exemplary apparatus shown in Figure 2 is disclosed *infra* in Example 4.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

As used herein, the phrase "one or more" is intended to cover a non-exclusive inclusion. For example, one or more of A, B, and C implies any one of the following: A alone, B alone, C alone, a combination of A and B, a combination of B and C, a combination of A and C, or a combination of A, B, and C.

Also, use of "a" or "an" are employed to describe elements and described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below.

In addition, the materials, methods, and examples are illustrative only and not intended to be limiting.

In the foregoing specification, the concepts have been disclosed with reference to specific embodiments. However, one of ordinary skill in the art appreciates that various modifications and changes can be made without departing from the scope of the invention as set forth in the claims below.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all embodiments.

It is to be appreciated that certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges include each and every value within that range.

The concepts disclosed herein will be further described in the following examples, which do not limit the scope of the invention described in the claims.

The discussion below describes how PTF based polymers, copolymers and blends and fibers made therefrom are formed.

### EXAMPLES

### Methods

### Molecular Weight by Size Exclusion Chromatography

A size exclusion chromatography system Alliance 2695™ from Waters Corporation (Milford, MA), was provided with a Waters 414™ differential refractive index detector, a multiangle light scattering photometer DAWN Heleos II (Wyatt Technologies, Santa Barbara, CA), and a ViscoStar™ differential capillary viscometer detector (Wyatt). The software for data acquisition and reduction was Astra® version 5.4 by Wyatt. The columns used were two Shodex GPC HFIP-806M ™ styrene-divinyl benzene columns with an exclusion limit of 2 x 10⁷ and 8,000/30cm theoretical plates; and one Shodex GPC HFIP-804M ™ styrene-divinyl benzene column with an exclusion limit 2 x 10⁵ and 10,000/30 cm theoretical plates.

The specimen was dissolved in 1,1,1,3,3,3-hexafluoro-2-propanol (HFIP) containing 0.01 M sodium trifluoroacetate by mixing at 50 °C with moderate agitation for four hours followed by filtration through a 0.45 µm PTFE filter. Concentration of the solution was circa 2 mg/mL.

Data was taken with the chromatograph set at 35°C, with a flow rate of 0.5 ml/min. The injection volume was 100 µl. The run time was 80 min. Data reduction was performed incorporating data from all three detectors described above. 8 scattering angles were employed with the light scattering detector. No standard for column calibration was involved in the data processing.

### Molecular Weight bv Intrinsic Viscosity

Intrinsic viscosity (IV) was determined using the Goodyear R-103B Equivalent IV method, using T-3, Selar® X250, Sorona®64 as calibration standards on a Viscotek® Forced Flow Viscometer Modey Y-501C. Methylene chloride/trifluoro acetic acid was the solvent carrier.

### Thermal Analysis

Glass transition temperature (T_{g}) and melting point (Tₘ) were determined by differential scanning calorimetry (DSC) performed according to ASTM D3418-08.

### ¹H-NMR Spectroscopy

¹H-NMR spectra were recorded on a 400 MHz NMR in either deuterated chloroform (CDCl₃) or tetrachloroethane (tce-d2). Proton chemical shifts are reported in ppm downfield of TMS using the resonance of the deuterated solvent as internal standard.

### Fiber mechanical properties

Fiber tenacity was measured on a Statimat ME fully automated tensile tester. The test was run according to an automatic static tensile test on yarns with a constant deformation rate according to ASTM D 2256.

### Fiber crystallinity determination

Wide angle X-ray scattering (WAXS) is a non-disruptive technique to study fiber crystallinity. WAXS generates a diffraction pattern from which crystallinity is measured and depicted as a crystallinity index (CI). CI is defined as the ratio of the area of crystalline peaks to the total area after deconvolution of the crystalline peaks from the broad amorphous regions in the XRD pattern. CI takes a value between 0 and 1, i.e. 0 for a fully amorphous sample and 1 for a fully crystalline sample.

Measurements were made on a PANalytical X'Pert MPD diffractometer equipped with a Curved Graphite Monochromator producing Cu K-Alpha radiation (wavelength = 1.5418). Measurement conditions: 0.5 degree divergence slit, 0.5 degree anti-scatter slit and 0.3mm receiving slit, and generator setting of 45kV, 40mA.

The data are collected in reflection geometry. The diffraction scan range is 4 to 40 degrees two-theta with a step size of 0.05 degrees. During the measurement the sample is rotated 2 seconds per revolution with a counting time of 5 seconds per step.

### Materials

As used in the Examples below were: titanium(IV)isobutoxide (TBT catalyst), titanium(IV)isopropoxide (TPT catalyst), ethylene glycol, 1-4-butanediol, polytetramethyleneglycol 1000g/mol (PTMEG), trimethyltrimellitate (TMTM) obtained from Aldrich and used as received. 2,5-furandimethylester (FDME) was obtained from AstaTech and used as received. Ethylene copolymer Surlyn® 8920, Polytrimethylene terephthalate (Sorona®, PTT, J1156, 0.96IV) and bio 1,3-propane diol (Bio-PDO™) were provided from the DuPont company and was used as received. Dovernox-10 was obtained from Dovernox® and used as received.

### Example 1: Synthesis, solid phase polymerization, and fiber spinning of polytrimethylene-2,5-furandicarboxylate (PTF) and resulting properties

### A. Polvcondensation of Bio-PDO™ and FDME (PTF pre-polvmer)

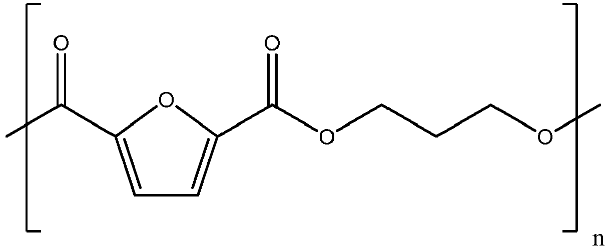

2,5-furandimethylester (2557 g), 1,3-propanediol (1902 g), titanium (IV) isopropoxide (2 g), Dovernox-10 (5.4g) were charged to a 10-lb stainless steel stirred autoclave (Delaware valley steel 1955, vessel #: XS 1963) equipped with a stirring rod and condenser. A nitrogen purge was applied and stirring was commenced at 30 rpm to form a slurry. While stirring, the autoclave was subject to three cycles of pressurization to 50 psi of nitrogen followed by evacuation. A weak nitrogen purge (approximately 0.5 L/min) was then established to maintain an inert atmosphere. While the autoclave was heated to the set point of 240°C methanol evolution began at a batch temperature of 185°C. Methanol distillation continued for 120 minutes during which the batch temperature increased from 185°C to 238°C. When the temperature leveled out at 238°C, a second charge of titanium (IV) isopropoxide (2g) was added. At this time a vacuum ramp was initiated that during 60 minutes reduced the pressure from 760 torr to 300 torr (pumping through the column) and from 300 torr to 0.05 torr (pumping through the trap). The mixture, when at 0.05 torr, was left under vacuum and stirring for 5 hours after which nitrogen was used to pressurize the vessel back to 760 torr.

The formed polymer was recovered by pushing the melt through an exit valve at the bottom of the vessel and into a water quench bath. The thus formed strand was strung through a pelletizer, equipped with an air jet to dry the polymer free from moisture, cutting the polymer strand into chips approximately 1/4inch long and approximately 1/8inch in diameter. Yield was approximately 2724 g (approximately 5lbs). T_{g} was ca. 58°C (DSC, 5°C/min, 2^{nd} heat), Tₘ was ca. 176°C (DSC, 5°C/min, 2^{nd} heat). ¹H-NMR (TCE-d) δ: 7.05 (s, 2H), 4.40 (m, 4H), 2.15 (m, 2H). Mₙ (SEC) approximately 10 300 D, PDI 1.97. IV approximately 0.55dL/g.

Using the same synthetic setup as described above, four other polymerizations were conducted. The summarized reaction setup, and obtained molecular weight characteristics are captured in the Table 1 below.

**Table 1: Characteristics of PTF pre-polymers.**

| Reaction # | Batch temp. (°C) | Condensation time (hrs) | Additive | Mₙ (g/mol)¹ | PDI¹ | IV (dL/g)² |
|---|---|---|---|---|---|---|
| PTF_1 p | 223 | 5 | N/A | 4 300 | 1.87 | 0.28 |
| PTF_2p | 228 | 7 | N/A | 5 400 | 1.89 | 0.35 |
| PTF_3p | 238 | 5 | D-10³ | 10 300 | 1.97 | 0.55 |
| PTF_4p | 248 | 4 | D-10³ | 9100 | 2.04 | 0.57 |

| | | | | | | |
|---|---|---|---|---|---|---|
| from SEC, from intrinsic viscosity, Dovernox-10 (D-10). | | | | | | |

### B. Solid phase polymerization of PTF pre-polymers

In order to increase the molecular weight of the PTF pre-polymers (described in section 1A above) solid phase polymerization was conducted. The quenched and pelletized PTF pre-polymer was initially crystallized by placing the material in a vacuum oven, subsequently heating the pellets under vacuum and a weak nitrogen purge to 120°C for 120 minutes. At this time the oven temperature was increased to approximately 163°C and the pellets left under vacuum/nitrogen purge condition to build molecular weight. The oven was turned off and the pellets allowed to cool and analyzed with SEC and IV, for a summary of conditions and obtained molecular weights see Table 2 below.

**Table 2: Characteristics of solid phased PTF polymers.**

| Polymer | PTF prepolymer used | SPP temp. (°C) | SPP reaction time (hrs) | Mₙ (g/mol)¹ | PDI¹ | IV (dL/g)² |
|---|---|---|---|---|---|---|
| PTF_1 | PTF_1 p | 163 | 423 | 11 500 | 1.91 | 0.52 |
| PTF_2 | PTF_2p | 163 | 423 | 13 900 | 2.09 | 0.70 |
| PTF_3 | PTF_3p | 163 | 256 | 18 100 | 1.95 | 0.78 |
| PTF_4 | PTF_4p | 165 | 290 | n/a | n/a | 0.92 |

| | | | | | | |
|---|---|---|---|---|---|---|
| ¹ from SEC, ² from intrinsic viscosity. | | | | | | |

### C. Fiber spinning and fiber properties

Pellets of polymer prepared as described above (Example 1A and 1B) were melt spun into spun-drawn, or partially oriented fibers. The pellets were fed using a K-Tron weight loss feeder to a 28 millimeter diameter twin screw extruder operating at ca. 30-50 rpm to maintain a die pressure between 400-1100 psi. The extruder has nine heated barrel zones and the polymer was extruded with the following temperature settings: 100/150/230/230/230/230/230/230/230°C. A Zenith metering pump conveyed the melt to the spinneret at a throughput of approximately 10.5g/min, the transfer line temperature was held at 240°C.

Referring to Figure 1 the molten polymer from the metering pump was forced through a 4 mm glass bead, one 50 mesh, and five 200 mesh screens, to a 10 hole (d/l, 12/30 mills) or 17 hole (d/l, 12/48 mills or d/l, 15/90 mills) round spinneret, 301, heated to 240°C. The filament stream leaving the spinneret, 302, were passed through an air quench zone, 303, where they were impinged upon a transverse air stream at 21 °C. The filaments were then passed over a spin finish head, 304, where a spin finish was applied (1wt% finish on yarn), and the filaments were converged to form a yarn. The yarn so formed was conveyed via a tensioning roll, 305, onto two non-heated feed rolls (godets), 306, and then onto two non-heated draw rolls (godets), 308, via a steam jet, 307, operating at a temperature of 130°C and a pressure of 30psi. From the draw rolls, 308, the filaments were passed onto two annealing rolls (godets), 309, and to a pair of let-down rolls, 310, and collected on a winder, 311. The spinneret pack (top and band) was set at 240°C, and the die at 240°C. For spinning partially oriented yarn a winder, 312, was added after the feed rolls, 306, and non-drawn yarn collected at various wind-up speeds.

Additional spinning conditions and resulting fiber properties are summarized in Tables 3-11 below.

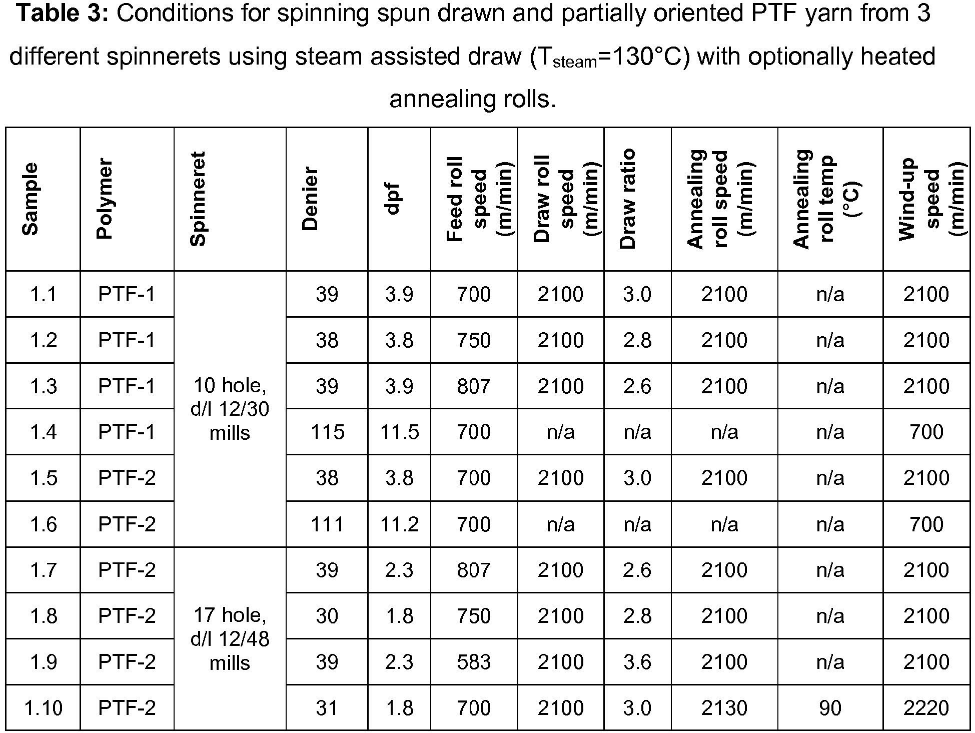

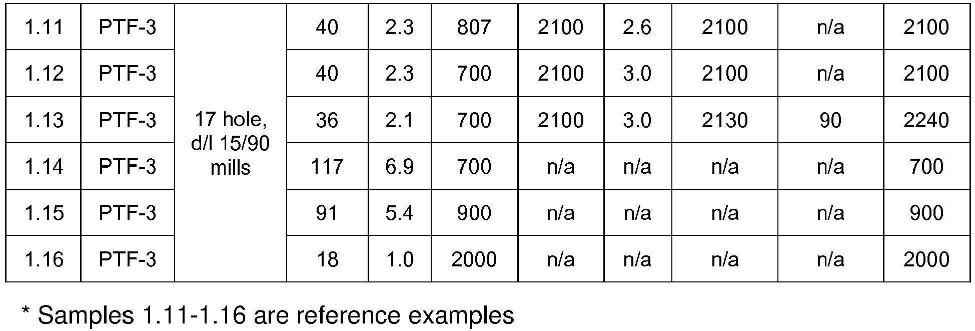

**Table 4: Mechanical properties of spun drawn and partially oriented (POY) PTF yarn.**

| **Sample** | **Polymer** | **Denier** | **dpf** | **Draw ratio** | **Line speed** | **Modulus (g/den)** | **Tenacity (g/den)** | **Elongation (%)** |
|---|---|---|---|---|---|---|---|---|
| 1.1 | PTF-1 | 39 | 3.9 | 3.0 | 2100 | 36.4 | 1.1 | 27.4 |
| 1.2 | PTF-1 | 38 | 3.8 | 2.8 | 2100 | 38.3 | 1.0 | 24.9 |
| 1.3 | PTF-1 | 39 | 3.9 | 2.6 | 2100 | n/a | n/a | n/a |
| 1.4 | PTF-1 | 115 | 11.5 | POY | 700 | n/a | n/a | n/a |
| 1.5 | PTF-2 | 38 | 3.8 | 3.0 | 2100 | 40.1 | 1.6 | 31.9 |
| 1.6 | PTF-2 | 111 | 11.2 | POY | 700 | n/a | n/a | n/a |
| 1.7 | PTF-2 | 39 | 2.3 | 2.6 | 2100 | 36.3 | 1.5 | 43.3 |
| 1.8 | PTF-2 | 30 | 1.8 | 2.8 | 2100 | 45.8 | 1.9 | 34.9 |
| 1.9 | PTF-2 | 39 | 2.3 | 3.6 | 2100 | 41.8 | 1.6 | 23.3 |
| 1.10 | PTF-2 | 31 | 1.8 | 3.0 | 2130 | 32.4 | 1.4 | 46.4 |
| 1.11 | PTF-3 | 40 | 2.3 | 2.6 | 2100 | 51.7 | 2.3 | 18.9 |
| 1.12 | PTF-3 | 40 | 2.3 | 3.0 | 2100 | 51.5 | 2.5 | 17.4 |
| 1.13 | PTF-3 | 36 | 2.1 | 3.0 | 2240 | 36.9 | 2.2 | 30.2 |
| 1.14 | PTF-3 | 117 | 6.9 | n/a | 700 | 26.3 | 0.8 | 194.3 |
| 1.15 | PTF-3 | 91 | 5.4 | n/a | 900 | 27.3 | 0.9 | 177.7 |
| 1.16 | PTF-3 | 18 | 1.0 | n/a | 2000 | 47.5 | 2.0 | 62.4 |

| | | | | | | | | |
|---|---|---|---|---|---|---|---|---|
| * Samples 1.11-1.16 are reference examples | | | | | | | | |

As seen in table 4, PTF of varying molecular weights can be successfully spun into fibers at various draw ratios to produce filaments with a steam assisted draw. Obtained filaments are strong, pliable and have measured mechanical properties similar to commercial fibers based on PET or Sorona®. One unexpected result was the ability to successfully spin the low molecular weight PTF grade (PTF-1). Another unexpected finding are the relatively high fiber mechanical despite a low crystalline content of the filaments. All measured crystallinity indexes using WAXS were close to zero.

**Table 5: Conditions for spinning spun drawn PTF yarn from a 17 hole, d/l 15/60 mills spinneret using heated draw rolls, and obtained fiber mechanical properties.**

| Sample | Polyme r | Denier | dpf | Feed roll speed (m/min) | Draw roll speed (m/min) | Dra w ratio | Annealin g roll speed (m/min) | Feed roll temp (°C) | Dra w roll temp (°C) | Annealin g roll temp (°C) | Wind-up speed (m/min) | Modulu s (g/den) | Tenaci ty (g/den) | Elongatio n at break (%) |
|---|---|---|---|---|---|---|---|---|---|---|---|---|---|---|
| 1.17 | PTF 4 | 38 | 2.2 | 954 | 2100 | 2.2 | 2100 | 60 | 90 | n/a | 2100 | 35.7 | 3.06 | 40.3 |
| 1.18 | PTF_4 | 38 | 2.2 | 1050 | 2100 | 2.0 | 2100 | 60 | 90 | n/a | 2100 | 36.3 | 2.98 | 45.7 |
| 1.19 | PTF_4 | 37 | 2.1 | 1050 | 2100 | 2.0 | 2100 | 60 | 100 | n/a | 2100 | 31.9 | 2.61 | 61.6 |
| 1.20 | PTF_4 | 37 | 2.1 | 954 | 2100 | 2.2 | 2100 | 60 | 100 | n/a | 2100 | 32.3 | 2.62 | 53.6 |

**Table 6: Conditions for spinning spun drawn PTF yarn from a 17 hole, d/l 15/60 mills spinneret using heated draw rolls and a two stage draw with optionally heated annealing rolls, and obtained fiber mechanical properties.**

| Sample | Polyme r | Denie r | dpf | Feed roll speed (m/min ) | Draw roll speed (m/min ) | Dra w ratio initi al | Anneali ng roll speed (m/min) | Dra w ratio final | Fee d roll tem p (°C) | Dra w roll tem p (°C) | Anneali ng roll temp (°C) | Wind-up speed (m/min ) | Modul us (g/den) | Tenacit y (g/den) | Elongati. on at break (%) |
|---|---|---|---|---|---|---|---|---|---|---|---|---|---|---|---|
| 1.17 | PTF_4 | 34 | 2 | 954 | 2100 | 2.2 | 2300 | 2.4 | 60 | 110 | n/a | 2300 | 30.2 | 1.93 | 57.3 |
| 1.18 | PTF_4 | 35 | 2.05 | 840 | 2100 | 2.5 | 2200 | 2.6 | 60 | 110 | n/a | 2200 | 30.0 | 1.70 | 52.1 |
| 1.19 | PTF_4 | 28 | 1.6 | 900 | 2100 | 2.33 | 2700 | 3.0 | 60 | 110 | n/a | 2700 | 37.6 | 2.24 | 34.2 |
| 1.20 | PTF_4 | 27 | 1.5 | 900 | 2100 | 2.33 | 2900 | 3.2 | 60 | 110 | n/a | 2900 | 40.9 | 2.40 | 26.7 |
| 1.17 | PTF 4 | 26 | 1.5 | 900 | 2100 | 2.33 | 2900 | 3.2 | 60 | 110 | 110 | 2920 | 29.1 | 1.37 | 40.4 |

| | | | | | | | | | | | | | | | |
|---|---|---|---|---|---|---|---|---|---|---|---|---|---|---|---|
| * Samples 1.17-1.20 are reference examples. | | | | | | | | | | | | | | | |

As seen in Table 5 and 6, PTF can be successfully spun into fibers using heated draw rolls and using two-staged draw to produce filaments. Obtained filaments are strong, pliable and have measured mechanical properties similar to commercial fibers based on PET or Sorona®. All measured crystallinity indexes using WAXS were close to zero.

### Example 2: Partially Oriented PTF Yarn

Partially oriented yarn is produced by directly winding the yarn after the feed roll without any drawing winder, These non-drawn yarns were collected at various wind-up speeds.

**Table 7: Conditions for spinning partially oriented PTF yarn from a 17 hole, d/l 15/60 mills spinneret.**

| Sample | Polymer | Denier | dpf | Feed roll speed (m/min) | Wind-up speed (m/min) |
|---|---|---|---|---|---|
| 2.1 | PTF_4 | 161 | 9.4 | 500 | 500 |
| 2.2 | PTF_4 | 78 | 4.5 | 1000 | 1000 |

**Table 8: Conditions for heated drawn yarn from a partially oriented PTF yarn precursor, spun from a 17 hole, d/l 15/60 mills spinneret.**

| Sample | Polymer | Pre draw denie r | Feed roll speed (m/min) | Draw roll speed (m/min) | Draw ratio | Feed roll temp (°C) | Draw roll temp (°C) | Post draw denie r | Wind-up speed (m/min) | Modulus (g/den) | Tenacit y (g/den) | Elongatio n at break (%) |
|---|---|---|---|---|---|---|---|---|---|---|---|---|
| 2.3 | PTF 4 | 161 | 100 | 280 | 2.8 | 60 | 110 | 62 | 280 | 24.0 | 0.69 | 88.7 |
| 2.4 | PTF 4 | 78 | 100 | 280 | 2.8 | 60 | 110 | 25 | 280 | 29.5 | 0.67 | 35.8 |
| 2.5 | PTF 4 | 78 | 100 | 280 | 2.8 | 60 | 115 | 22 | 280 | 28.8 | 0.59 | 20.2 |

| | | | | | | | | | | | | |
|---|---|---|---|---|---|---|---|---|---|---|---|---|
| * Samples 2.1-2.5 are reference examples. | | | | | | | | | | | | |

Table 7 shows that PTF can be converted into Partially Oriented Yarn (POY). On drawing the POY using heated draw rolls in a low line speed process, filaments are produced that are pliable and with relatively high mechanical strength (Table 8). All measured crystallinity indexes using WAXS were close to zero.

### Example 3: Single filaments from a polymer blend of PTF and Surlyn®8920 ethylene copolymer

A compound of PTF_4 and Surlyn®8920 pellets were made prior to melt spinning. Here PTF_4 pellets and Surlyn®8920 pellets were fed to provide a concentration of 10 or 20% of Surlyn®8920 based upon the total weight of the blend. The thus combined pellets were mixed in a plastic bag by shaking and tumbling by hand.

The thus mixed batch was placed into a K-Tron T-20 (K-Tron Process Group, Pittman, NJ) weight loss feeder feeding a PRISM laboratory co-rotating twin screw extruder (available from Thermo Fisher Scientific, Inc.) equipped with a barrel having four heating zones and a diameter of 16 millimeter fitted with a twin spiral P1 screw. The extruder was fitted with a 3/16" diameter circular cross-Section single aperture strand die. The nominal polymer feed rate was 8 lbs/hr. The first barrel Section was set at 180 °C and the subsequent three barrel Sections and the die were set at 230 °C. The screw speed was set at 150 rpm. The melt temperature of the extrudate was determined to be 236 °C by inserting a thermocouple probe into the melt as it exited the die. The thus extruded monofilament strand was quenched in a water bath. Air knives dewatered the strand before it was fed to a cutter that sliced the strand into about 2 mm length blend pellets.

The thus prepared compound was dried and fed into the melt spinning extruder to provide a final concentration of Surlyn®8920 as provided in Table 9.

Table 9 shows feasibility of producing spun yarn using PTF with nucleating agents such as Surlyn® 8920 to produce filaments that are strong, pliable and have measured mechanical properties similar to commercial fibers based on PET or Sorona®. While filaments with 2wt% Surlyn®8920 had measured crystallinity indexes using WAXS close to zero filaments with 4wt% Surlyn®8920 had a measured crystallinity of 0.05 (sample 3.8) demonstrating an ability to nucleate PTF crystallization in a spinning operation.

**Table 9: Conditions for spinning Surlyn® 8920 nucleated spun drawn PTF yarn from a 17 hole, d/l 15/60 mills spinneret using heated draw rolls, and obtained fiber mechanical properties.**

| Sample | Polymer | Surlyn® conc. (w%) | Denier | dpf | Feed roll speed (m/min) | Draw roll speed (m/min) | Draw ratio | Annealin g roll speed (m/min) | Feed roll temp (°C) | Draw roll temp (°C) | Annealin g roll temp (°C) | Wind-up speed (m/min) | Modulus (g/den) | Tenacit y (g/den) | Elongatio n at break (%) |
|---|---|---|---|---|---|---|---|---|---|---|---|---|---|---|---|
| 3. 1 | PTF_4 | 2 | 37 | 2.1 | 950 | 2100 | 2.2 | 2100 | 60 | 90 | n/a | 2100 | 34.2 | 2.85 | 49.0 |
| 3.2 | PTF_4 | 2 | 37 | 2.1 | 1050 | 2100 | 2.0 | 2100 | 60 | 90 | n/a | 2100 | 34.6 | 2.71 | 49.7 |
| 3.3 | PTF 4 | 2 | 37 | 2.1 | 1050 | 2100 | 2.0 | 2100 | 60 | 100 | n/a | 2100 | 29.6 | 2.10 | 64.8 |
| 3.4 | PTF_4 | 2 | 37 | 2.1 | 950 | 2100 | 2.2 | 2100 | 60 | 100 | n/a | 2100 | 30.0 | 2.19 | 60.9 |
| 3.5 | PTF 4 | 2 | 37 | 2.1 | 945 | 2080 | 2.2 | 2100 | 60 | 110 | n/a | 2100 | 29.1 | 1.83 | 80.9 |
| 3.6 | PTF_4 | 2 | 37 | 2.1 | 830 | 2080 | 2.5 | 2100 | 60 | 110 | n/a | 2105 | 27.4 | 1.56 | 72.5 |
| 3.7 | PTF_4 | 4 | 37 | 2.1 | 950 | 2100 | 2.2 | 2100 | 60 | 90 | n/a | 2100 | 32.5 | 2.59 | 42.3 |
| 3.8 | PTF_4 | 4 | 37 | 2.1 | 1050 | 2100 | 2.0 | 2100 | 60 | 90 | n/a | 2100 | 34.2 | 2.62 | 47.8 |
| 3.9 | PTF_4 | 4 | 37 | 2.1 | 1050 | 2100 | 2.0 | 2100 | 60 | 100 | n/a | 2100 | 30.1 | 2.12 | 59.6 |
| 3.10 | PTF_4 | 4 | 37 | 2.1 | 950 | 2100 | 2.2 | 2100 | 60 | 100 | n/a | 2100 | 30.7 | 2.10 | 58.2 |
| 3. 11 | PTF 4 | 4 | 37 | 2.1 | 945 | 2080 | 2.2 | 2100 | 60 | 110 | n/a | 2100 | 27.5 | 1.76 | 91.0 |
| 3.12 | PTF 4 | 4 | 36 | 2.1 | 830 | 2080 | 2.5 | 2100 | 60 | 110 | n/a | 2100 | 27.0 | 1.67 | 76.7 |

| | | | | | | | | | | | | | | | |
|---|---|---|---|---|---|---|---|---|---|---|---|---|---|---|---|
| * Samples 3.1-3.12 are reference examples. | | | | | | | | | | | | | | | |

### Example 4: Single filaments from a PTF copolymer containing polytetramethylene glycol (PTMEG) (PTF-co-PTMEG), and polyalkylene furandicarboxylate polymers

### A. Preparation of a PTF copolymer (PTF-co-PTMEG)

Bio-PDO™ (110.6g, 1.454mol), FDME (133.8g, 0.727mol), PTMEG (1.5g, 1.5mmol), and TMTM (162mg, 0.63mmol), were charged to a pre-dried three necked 500mL kettle reactor. An overhead stirrer and a distillation condenser were attached. The reactants were stirred at a speed of 50 rounds per minute (rpm) and the reaction mass was kept under nitrogen_{(g)} (N₂) purge atmosphere, the condenser was kept at 23°C. The contents were degassed three times by evacuating down to 100Torr and refilling back with N₂ gas. TBT catalyst [0.3g or 0.31mL] was added after the first evacuation. The flask was immersed into a preheated metal bath set at 160°C and allowed to equilibrate for 20 minutes to melt the solids. The temperature was increased to 180°C and held for 60 minutes after which the temperature was increased to 210°C and held for an additional 60 minutes to complete the ester interchange and distillation of methanol. The nitrogen purge was closed and a vacuum ramp started, after about 60 minutes the vacuum reached a value of 50-60mTorr. The temperature was increased to 230°C and the reaction held under vacuum for 3 hours with stirring at 50-180rpm. The torque was monitored (readings at 180rpm) and the polymerization was stopped by removing the heat source. The over head stirrer was stopped and elevated from the floor of the reaction vessel before the vacuum was turned off and the system purged with N₂ gas. The kettle reactor was separated and the product decanted and allowed to cool under a purge of nitrogen. The recovered polymer was chopped into pellets using a Wiley mill that was cooled with liquid nitrogen. The so produced polymer pellets were dried under vacuum and a weak nitrogen stream at 120°C for 24 hours. The recovered yield was approximately 70%, or approximately 100g. T_{g} was approximately 55°C, Tₘ was approximately 161°C (second heating, 10°C/min). ¹H-NMR (tce-d) δ: 7.20 (m, 2H), 4.55-4.35 (m, 4H), 3.37 (m, 4H), 2.30-2.20 (m, 2H), 1.55 (m, 4H). Intrinsic viscosity: 0.55 dL/g.

### B. Press spinning and properties of a single filament from a PTF copolymer

Referring to Figure 2 below the polymer prepared above (PTF copolymer, Example 2.1), 401, was charged to a steel cylinder, 402, and topped of with a Teflon® PTFE plug, 403. A hydraulically driven piston, 404, compressed the pellets, 401, into a melting zone provided with a heater and heated to 215°C, 405, where a melt, 406, was formed, and the melt then forced into a separately heated, 407, round cross-Section single-hole spinneret (12 mills diameter, 36 mills length), 408, heated to 215°C. Prior to entering the spinneret, the polymer passed through a filter pack containing one 50 and three 200 mesh screens, not shown. The melt was extruded into a single strand of fiber, 409, at a rate of 0.4g/min. The extruded fiber was passed through a transverse air quench zone, 410, and thence to a wind-up, 411. Optionally a draw step was included in which the filament was fed onto a cold feed roll, over a heated pin and onto a cold draw roll, and to a wind-up. A summary of conditions is given in Table 10 below.

Table 10 shows feasibility of producing a spun single filament from a copolymer of FDCA, Bio-PDO® and PTMEG. While the incorporation of 1wt% PTMEG accelerates the ability of PTF to crystallize in a DSC pan during a 10°C/min heating scan the produced single filament was shown to be amorphous since the measured crystallinity index (WAXS) was close to zero.

### C. Preparation of a polyester control of 2,5-furandimethylester, and ethylene glycol (PEF)

Ethylene glycol (84.2g, 1.357mol) and FDME (125g, 0.678mol) were polymerized in the same setup as used in A above using Tyzor®TPT as catalyst (76µL). The only difference was that the ester interchange was made at 180°C for 60 minutes and 200°C for 60 minutes. The recovered polymer yield was approximately 63g. T_{g} was approximately 89°C, Tₘ was approximately 214°C (second heating, 10°C). ¹H-NMR (tce-d) δ: 7.30 (m, 2H), 4.70-4.30 (m, 4H). Mₙ (SEC) approximately 20100g/mol, PDI (SEC) 1.93.

### D, Preparation of a polyester control of 2,5-furandimethylester, and 1,4-butanediol (PBF)

1,4-butanediol (122.3g, 1.357mol) and FDME (125g, 0.678mol) were polymerized in the same setup as used in A above using Tyzor®TPT as catalyst (84µL). The recovered polymer yield was approximately 66g. T_{g} was approximately 39°C, Tₘ was approximately 169°C. ¹H-NMR (tce-d) δ: 7.30 (m, 2H), 4.70-4.30 (m, 4H), 2.0 (m, 4H). Mₙ (SEC) approximately 33700g/mol, PDI (SEC) 1.68.

As shown in Table 11, various poly alkylene furandicarboxylate polymers were successfully drawn to create POYs or drawn yarn to provide fibers with mechanical properties similar to commercial fibers, one example being Sorona® J1156.

**able 10: Conditions for press spinning a nucleated and partially oriented, or drawn, PTF copolymer filament from a ingle hole, d/l 12/36 mills spinneret.**

| Sampl e | Polymer | Deni er | Flow rate (g/min ) | Feed roll speed (m/mi n) | Draw roll speed (m/mi n) | Dra w ratio | Fee d roll tem p (°C) | Dra w roll tem p (°C) | Hot pin temp (°C) | Wind-up speed (m/min ) | Modul us (g/den) | Tenaci ty at max load (g/den) | Elongati on at max load (%) |
|---|---|---|---|---|---|---|---|---|---|---|---|---|---|
| 4.1 | PTF-co-PTMEG | 2.1 | 0.4 | n/a | n/a | n/a | n/a | n/a | n/a | 1000 | 23.9 | 1.2 | 249 |
| 4.2 | PTF-co-PTMEG | 1.5 | 0.4 | n/a | n/a | n/a | n/a | n/a | n/a | 1420 | 22.0 | 1.5 | 211 |
| 4.3 | PTF-co-PTMEG | 11.2 | 0.4 | 200 | 350 | 1.75 | 23 | 23 | 140 | 333 | 24.1 | 0.9 | 249 |
| 4.4 | PTF-co-PTMEG | 9.8 | 0.4 | 200 | 450 | 2.25 | 23 | 23 | 140 | 430 | 29.3 | 1.3 | 156 |

**Table 11: Conditions for press spinning poly alkylene furandicarboxylate polymers in partially oriented, or drawn, filament from a single hole, d/l 12/36 mills spinneret.**

| Sampl e | Polymer | Deni er | Flow rate (g/min ) | Feed roll speed (m/mi n) | Draw roll speed (m/mi n) | Dra w ratio | Fee d roll tem p (°C) | Dra w roll tem p (°C) | Hot pin temp (°C) | Wind-up speed (m/min ) | Modul us (g/den) | Tenaci ty at max load (g/den ) | Elongatio n at max load (%) |
|---|---|---|---|---|---|---|---|---|---|---|---|---|---|
| 5.1 | PEF | 10 | 0.8 | n/a | n/a | n/a | n/a | n/a | n/a | 700 | - | - | - |
| 5.2 | PTF_3 | 9.7 | 0.8 | n/a | n/a | n/a | n/a | n/a | n/a | 700 | 26 | 0.7 | 3.5 |
| 5.3 | PTF_3 | 9 | 0.8 | 249 | 703 | 2.8 | RT | RT | n/a | 700 | 35 | 2 | 87 |
| 5.4 | PBF | 11.2 | 0.8 | n/a | n/a | n/a | n/a | n/a | n/a | 700 | 18 | 1.9 | 200 |
| 5.5 | PBF | 10.2 | 0.8 | 250 | 696 | 2.8 | RT | RT | n/a | 655 | 47 | 3.7 | 47 |
| 5.6 | Sorona® J1156 | 10 | 0.8 | n/a | n/a | n/a | RT | RT | n/a | 700 | 19 | 1.7 | 370 |
| 5.7 | Sorona® J1156 | 14 | 0.8 | 250 | 700 | 2.8 | RT | RT | n/a | 659 | 24 | 3.2 | 160 |

| | | | | | | | | | | | | | |
|---|---|---|---|---|---|---|---|---|---|---|---|---|---|
| RT: Room Temperature * Samples 5.1-5.7 are reference examples. | | | | | | | | | | | | | |

## Claims

1. A fiber comprising a polymer, wherein the polymer comprises poly(alkylene furandicarboxylate) obtained by polymerization of reaction mixture comprising furan dicarboxylic acid or its functional equivalent and a C₂ to C₁₂ aliphatic diol selected from the group consisting of ethylene glycol, diethylene glycol, 1,2-propanediol, 1,3-propanediol, 1,4-butanediol, 1,5-pentanediol, 1,6-hexanediol, 1,4-cyclohexanedimethanol, and 2,2-dimethyl-1,3-propanediol,
wherein the poly(alkylene furandicarboxylate) has a number average molecular weight of 10,000-18,000 g/mol and is amorphous.

2. The fiber of claim 1, wherein the polymer has a heat of crystallization of 10 J/g or less, as measured by differential scanning calorimetry.

3. The fiber of claim 1, wherein the polymer has a heat of crystallization of 1 J/g or less, as measured by differential scanning calorimetry.

4. The fiber of Claim 1 wherein the fiber is oriented.

5. The fiber of Claim 1, wherein an aliphatic diol comprises a C₃ diol and the resulting polymer is poly(trimethylene-furandicarboxylate).

6. The fiber of Claim 1, wherein the polymer is a polymer blend comprising (1) poly(trimethylene-2,5-furandicarboxylate) and (2) a poly(alkylenefurandicarboxylate),
wherein the poly(alkylene-furandicarboxylate) is derived from furan dicarboxylic acid or its functional equivalent and an aliphatic diol selected from the group consisting of ethylene glycol, and C₄, to C₁₂, diols, and wherein the blend comprises 0.1 to about 99.9% by weight of poly(alkylenefurandicarboxylate) based on the total weight of the blend.

7. The fiber of Claim 1, wherein the polymer is a polymer blend comprising (1) poly(trimethylene-2,5-furandicarboxylate) and (2) a poly(alkylene terephthalate) that is derived from terephthalic acid or its functional equivalent and a C₂ to C₁₂ aliphatic diol, and wherein the blend comprises 0.1 to about 99.9% by weight of poly(alkylene terephthalate) based on the total weight of the blend.

8. The fiber of Claim 1, wherein the polymer is a copolymer and the furan dicarboxylic acid is 2,5-furan dicarboxylic acid, and wherein the reaction mixture further comprises (i) at least one other acid selected from the group consisting of dicarboxylic acids, polyfunctional acids and hydroxy acids, or mixtures thereof, and (ii) optionally a polyol, wherein the diol and the optional polyol are present in a combined total molar ratio of at least 1.2:1 relative to the combined total moles of the 2,5-furan dicarboxylic acid and the at least one other acid, and wherein the 2,5-furan dicarboxylic acid is present in a molar ratio of from about 1:100 to about 100:1 relative to the at least one other acid.

9. A yarn comprising the fiber of Claim 1.

10. A bicomponent fiber comprising the fiber of Claim 1.

11. A multifilament fiber comprising the fiber of Claim 1.

12. A fabric or a textile prepared from the fiber of Claim 1.

13. A fabric or textile according to Claim 12 which is woven, knitted or nonwoven.

14. A method of making a fiber comprising:
a. providing a polymer composition comprising poly(alkylene furandicarboxylate) obtained by polymerization of reaction mixture comprising furan dicarboxylic acid and a C₂ to C₁₂ aliphatic diol having a number average molecular weight of 10,000-18,000 g/mol; and
b. spinning the polymer composition to form fibers, such that the highest temperature applied to the polymer during spinning is in the range of from about 210 °C to about 265 °C;
wherein the resulting fibers are amorphous.

15. The fiber of claim 1, having at least one of:
- a percent elongation in the range of 25-500;
- a modulus in the range of 30-100 g/den; and
- a tenacity in the range of 0.8-5 g/den.

## Patentansprüche

1. Faser umfassend ein Polymer, wobei das Polymer Poly(alkylenfurandicarboxylat) umfasst, das durch die Polymerisation einer Reaktionsmischung erhalten wird, die Furandicarbonsäure oder ihr funktionelles Äquivalent und ein aliphatisches C₂-C₁₂-Diol umfasst, ausgewählt aus der Gruppe bestehend aus Ethylenglykol, Diethylenglykol, 1,2-Propandiol, 1,3-Propandiol, 1,4-Butandiol, 1,5-Pentandiol, 1,6-Hexandiol, 1,4-Cyclohexandimethanol und 2,2-Dimethyl-1,3-propandiol,
wobei das Poly(alkylenfurandicarboxylat) ein zahlendurchschnittliches Molekulargewicht von 10.000-18.000 g/Mol aufweist und amorph ist.

2. Faser nach Anspruch 1, wobei das Polymer eine Kristallisationswärme von 10 J/g oder weniger, wie durch Differential-Scanning-Kalorimetrie gemessen, aufweist.

3. Faser nach Anspruch 1, wobei das Polymer eine Kristallisationswärme von 1 J/g oder weniger, wie durch Differential-Scanning-Kalorimetrie gemessen, aufweist.

4. Faser nach Anspruch 1, wobei die Faser orientiert ist.

5. Faser nach Anspruch 1, wobei ein aliphatisches Diol ein C₃-Diol umfasst und das resultierende Polymer Poly(trimethylenfurandicarboxylat) ist.

6. Faser nach Anspruch 1, wobei das Polymer eine Polymermischung ist, die (1) Poly(trimethylen-2,5-furandicarboxylat) und (2) Poly(alkylenfurandicarboxylat) umfasst,
wobei das Poly(alkylenfurandicarboxylat) von Furandicarbonsäure oder ihrem funktionellen Äquivalent und einem aliphatischen Diol abgeleitet ist, ausgewählt aus der Gruppe bestehend aus Ethylenglykol und C₄- bis C₁₂-Diolen und
wobei die Mischung 0,1 bis etwa 99,9 Gew.-% Poly(alkylenfurandicarboxylat), auf das Gesamtgewicht der Mischung bezogen, umfasst.

7. Faser nach Anspruch 1, wobei das Polymer eine Polymermischung ist, die (1) Poly(trimethylen-2,5-furandicarboxylat) und (2) ein Poly(alkylenterephthalat) umfasst, das von Terephthalsäure oder ihrem funktionellen Äquivalent und einem aliphatischen C₂- bis C₁₂-Diol abgeleitet ist, und wobei die Mischung 0,1 bis etwa 99,9 Gew.-% Poly(alkylenterephthalat), auf das Gesamtgewicht der Mischung bezogen, umfasst.

8. Faser nach Anspruch 1, wobei das Polymer ein Copolymer ist und die Furandicarbonsäure 2,5-Furandicarbonsäure ist und wobei die Reaktionsmischung ferner (i) mindestens eine andere Säure ausgewählt aus der Gruppe bestehend aus Dicarbonsäuren, polyfunktioellen Säuren und Hydroxysäuren oder Mischungen davon und (ii) wahlweise ein Polyol umfasst, wobei das Diol und das wahlweise Polyol in einem kombinierten gesamten Molverhältnis von mindestens 1,2:1 mit Bezug auf die kombinierten gesamten Mole der 2,5-Furandicarbonsäure und der mindestens einen anderen Säure vorliegen und wobei die 2,5-Furandicarbonsäure in einem Molverhältnis von etwa 1:100 bis etwa 100:1 mit Bezug auf die mindestens eine Säure vorliegt.

9. Garn umfassend die Faser nach Anspruch 1.

10. Biokomponentenfaser umfassend die Faser nach Anspruch 1.

11. Multifilamentfaser umfassend die Faser nach Anspruch 1.

12. Textilstoff oder Textil, der/das aus der Faser nach Anspruch 1 hergestellt ist.

13. Textilstoff oder Textil nach Anspruch 12, der/das gewoben, gestrickt oder nichtgewoben ist.

14. Verfahren für die Herstellung einer Faser, umfassend:
a. Bereitstellen einer Polymerzusammensetzung, die Poly(alkylenfurandicarboxylat) umfasst, das durch die Polymerisation einer Reaktionsmischungen erhalten wird, die Furandicarbonsäure und ein aliphatisches C₂- bis C₁₂-Diol umfasst, das ein zahlendurchschnittliches Molekulargewicht von 10.000-18.000 g/Mol aufweist, und
b. Spinnen der Polymerzusammensetzung, um Fasern zu bilden, derart, dass die höchste Temperatur, die während des Spinnens auf das Polymer aufgebracht wird, im Bereich von etwa 210 °C bis etwa 265 °C liegt;
wobei die resultierenden Fasern amorph sind.

15. Faser nach Anspruch 1, die mindestens eines aufweist von:
- einer prozentualen Dehnung im Bereich von 25-500;
- einen Modul im Bereich von 30-100 g/Denier; und
- eine Festigkeit im Bereich von 0,8-5 g/Denier.

## Revendications

1. Fibre comprenant un polymère, le polymère comprenant du poly(furandicarboxylate d'alcylène) obtenu par polymérisation d'un mélange réactionnel comprenant de l'acide furane dicarboxylique ou son équivalent fonctionnel et d'un diol aliphatique en C₂ à C₁₂ sélectionné dans le groupe constitué de l'éthylène glycol, du diéthylène glycol, du 1,2-propanediol, du 1,3-propanediol, du 1,4-butanediol, du 1,5-pentanediol, du 1,6-hexanediol, du 1,4-cyclohexanediméthanol, et du 2,2-diméthyl-1,3-propanediol,
le poly(furandicarboxylate d'alcylène) ayant un poids moléculaire moyen en nombre de 10 000 à 18 000 g/mole et étant amorphe.

2. Fibre selon la revendication 1, le polymère ayant une chaleur de cristallisation de 10 J/g ou moins, telle que mesurée par calorimétrie différentielle à compensation de puissance.

3. Fibre selon la revendication 1, le polymère ayant une chaleur de cristallisation de 1 J/g ou moins, telle que mesurée par calorimétrie différentielle à compensation de puissance.

4. Fibre selon la revendication 1, la fibre étant orientée.

5. Fibre selon la revendication 1, un diol aliphatique comprenant un diol en C₃ et le polymère résultant étant le poly(furandicarboxylate de triméthylène).

6. Fibre selon la revendication 1, le polymère étant un mélange de polymères comprenant (1) du poly(2,5-furandicarboxylate de triméthylène) et (2) un poly(furandicarboxylate d'alcylène),
le poly(furandicarboxylate d'alcylène) étant dérivé d'acide furane dicarboxylique ou son équivalent fonctionnel et un diol aliphatique sélectionné dans le groupe constitué de l'éthylène glycol, et de diols en C₄ à C₁₂, et
le mélange comprenant de 0,1 à environ 99,9 % en poids de poly(furandicarboxylate d'alcylène) sur la base du poids total du mélange.

7. Fibre selon la revendication 1, le polymère étant un mélange de polymères comprenant (1) du poly(2,5-furandicarboxylate de triméthylène) et (2) un poly(téréphtalate d'alcylène) qui est dérivé d'acide téréphtalique ou son équivalent fonctionnel et d'un diol aliphatique en C₂ à C₁₂, et le mélange comprenant de 0,1 à environ 99,9 % en poids de poly(téréphtalate d'alcylène) sur la base du poids total du mélange.

8. Fibre selon la revendication 1, le polymère étant un copolymère et l'acide furane dicarboxylique étant l'acide 2,5-furane dicarboxylique, et le mélange réactionnel comprenant en outre (i) au moins un autre acide sélectionné dans le groupe constitué des acides dicarboxyliques, des acides polyfonctionnels et des acides hydroxy, ou de leurs mélanges, et (ii) facultativement un polyol, le diol et le polyol facultatif étant présents en un rapport molaire total combiné d'au moins 1,2:1 par rapport aux moles totales combinées de l'acide 2,5-furane dicarboxylique et du au moins un autre acide, et l'acide 2,5-furane dicarboxylique étant présent en un rapport molaire d'environ 1:100 à environ 100:1 par rapport audit au moins un autre acide.

9. Fil comprenant la fibre selon la revendication 1.

10. Fibre bicomposée comprenant la fibre selon la revendication 1.

11. Fibre multifilament comprenant la fibre selon la revendication 1.

12. Tissu ou textile préparé à partir de la fibre selon la revendication 1.

13. Tissu ou textile selon la revendication 12 qui est tissé, tricoté ou non-tissé.

14. Procédé de fabrication d'une fibre comprenant:
a. la fourniture d'une composition polymère comprenant du poly(furandicarboxylate d'alcylène) obtenu par polymérisation d'un mélange réactionnel comprenant de l'acide furane dicarboxylique et un diol aliphatique en C₂ à C₁₂ ayant un poids moléculaire moyen en nombre de 10 000 à 18 000 g/mole ;et
b. le filage de la composition polymère pour former des fibres, de sorte que la température la plus élevée appliquée au polymère durant le filage se situe dans la plage d'environ 210°C à environ 265°C;
les fibres résultantes étant amorphes.

15. Fibre selon la revendication 1, ayant au moins l'un parmi:
- un allongement en pourcentage situé dans la plage de 25 à 500;
- un module situé dans la plage de 30 à 100 g/den ; et
- une ténacité située dans la plage de 0,8 à 5 g/den.
